Europäisches Patentamt

European Patent Office

Office européen des brevets

(11) Veröffentlichungsnummer : **0 455 246 A2**

(12) **EUROPÄISCHE PATENTANMELDUNG**

(21) Anmeldenummer : **91107129.8**

(22) Anmeldetag : **02.05.91**

(51) Int. Cl.$^5$ : **G01M 3/16**

(30) Priorität : **01.05.90 DE 4013990**

(43) Veröffentlichungstag der Anmeldung :
**06.11.91 Patentblatt 91/45**

(84) Benannte Vertragsstaaten :
**AT BE CH DE DK ES FR GB GR IT LI LU NL SE**

(71) Anmelder : **Baum, Otto**
**Auf der Weid 4**
**W-6274 Hünstetten 2 (DE)**
Anmelder : **Balser, Helmut**
**Zur Schillereiche 11a**
**W-6204 Taunusstein (DE)**
Anmelder : **Hofmann, Walter**
**Zur Schillereiche 12**
**W-6204 Taunusstein (DE)**

(72) Erfinder : **Baum, Otto**
**Auf der Weid 4**
**W-6274 Hünstetten 2 (DE)**

(74) Vertreter : **Weber, Dieter, Dr. et al**
**Dr. Dieter Weber, Dipl.-Phys., Klaus Seiffert,**
**Dr. Winfried Lieke, Patentanwälte,**
**Gustav-Freytag-Strasse 25**
**W-6200 Wiesbaden 1 (DE)**

(54) **Vorrichtung zur Anzeige eines Lecks in einem Flachdach.**

(57)    Die vorliegende Erfindung betrifft eine Vorrichtung zur Anzeige eines Lecks in einem Flachdach mit einem Paar von dicht beabstandeten elektrischen Meßadern (1, 2), welche im trockenen Zustand voneinander isoliert sind, wobei jedoch zwischen die Meßadern (1, 2) eindringendes Wasser eine elektrisch leitfähige Verbindung zwischen den Meßadern herstellt und wobei eine Einrichtung (10) zur Messung des Widerstandes mindestens einer Meßader entlang ihrer Länge bis zur Feuchtigkeitsbrücke vorgesehen ist. Um ein derartiges System so weiterzuentwickeln, daß unter Beibehaltung der Genauigkeit der Leckortung die Meßsicherheit erhöht und Fehlanzeigen vermieden werden, wird erfindungsgemäß vorgeschlagen, daß in dichtem Abstand zu den beiden ersten Meßadern (1, 2) mindestens eine weitere Meßader (3) vorgesehen ist, welche im trockenen Zustand isoliert ist und in nassem Zustand eine elektrisch leitfähige Verbindung zu einer der beiden ersten Meßadern (1, 2) und/oder zu einer vierten Ader (4) hat, und daß die dritte Ader (3) mit einer Alarmeinrichtung (20) verbunden ist, welche so ausgelegt ist, daß sie ein Signal abgibt, wenn die dritte Ader zu einer der beiden ersten Meßadern (1 oder 2) und/oder zu der vierten Ader (4) eine elektrisch leitende Verbindung hat.

EP 0 455 246 A2

Fig. 2

Die vorliegende Erfindung betrifft eine Vorrichtung zur Anzeige eines Lecks in einem Flachdach mit einem Paar von dicht beabstandeten elektrischen Meßadern, welche im trockenen Zustand voneinander isoliert sind, wobei jedoch zwischen die Meßadern eindringendes Wasser eine elektrisch leitfähige Verbindung zwischen diesen herstellt und wobei eine Einrichtung zur Messung des Widerstandes mindestens einer der Adern entsprechend ihrer Länge bis zur Feuchtigkeitsbrücke vorgesehen ist.

Eine bekannte Vorrichtung der vorstehend genannten Art weist hierzu zusätzlich einen isolierten Meßdraht auf, welcher dafür verwendet wird, die beiden Teilschleifen, welche von den freien Enden der auf dem Dach verlegten Adern jeweils bis zur Feuchtigkeitsbrücke gebildet werden, in einer Brückenschaltung miteinander zu vergleichen.

Vorausgesetzt die Länge der Adern bzw. Drähte und ihre genaue Verlegung im Dach ist bekannt, so kann aus dem so ermittelten Widerstandsverhältnis auf den genauen Ort des Lecks geschlossen werden.

Allerdings kann unter der wasserdichten Schicht von Flachdächern sich auch gelegentlich Kondenswasser in mehr oder weniger kleinen Mengen bilden, so daß es hierdurch zu Fehlanzeigen eines Lecks kommt. Außerdem versagt die genaue Leckortung nach dieser Methode, wenn etwa mehrere Lecks vorhanden sind oder sich durch ein Leck eindringendes Wasser auf einen größeren Bereich verteilt hat, da dann in einer Brückenschaltung nicht mehr das Längenverhältnis der beiden Enden beiderseits eines Verbindungspunktes ermittelt werden kann. Außerdem erfolgt bei einem solchen System die Leckanzeige nicht automatisch, sondern es müssen von Zeit zu Zeit entsprechende Messungen vorgenommen werden.

Demgegenüber liegt der vorliegenden Erfindung die Aufgabe zugrunde, das bekannte System so weiter zu entwickeln, daß die Genauigkeit der Leckortung über den gemessenen Widerstandswert im wesentlichen erhalten bleibt, gleichzeitig jedoch die Meßsicherheit erhöht und Fehlanzeigen vermieden werden.

Diese Aufgabe wird dadurch gelöst, daß mindesten eine weitere Meßader vorgesehen ist, welche im trockenen Zustand isoliert ist und im nassen Zustand eine elektrisch leitfähige Verbindung zu einer der ersten beiden Meßadern und/oder zu einer vierten Meßader hat und daß die dritte Ader mit einer weiteren Meßeinrichtung verbunden ist, welche so ausgelegt ist, daß sie eine Anzeige und vorzugsweise ein Alarmsignal abgibt, wenn die dritte Ader zu einer der beiden ersten Meßadern und/oder zu der vierten Ader eine elektrisch leitende Verbindung hat.

Gemäß der vorliegenden Erfindung wird von einem Ende einer zweiten Meßader aus über die Feuchtigkeitsbrücke, welche die Verbindung zu einer ersten Meßader herstellt, ein Spannungsabgriff an der ersten Meßader geschaffen und der Widerstand der ersten Meßader bis zur Feuchtigkeitsbrücke erfaßt. Für die erste Meßader wählt man vorzugsweise ein Material mit ausreichend hohem Widerstand, so daß auch bei keinen Meßströmen ein leicht und genau meßbarer Spannungsabfall zur Verfügung steht. Der Widerstandswert ist unmittelbar ein Maß für den Längenabschnitt der ersten Meßader, an dessen Ende die Feuchtigkeitsbrücke aufgetreten ist. Gleichzeitig wird jedoch auch die Verbindung einer der beiden vorgenannten Meßadern mit einer dritten Ader erfaßt, welche mit einem Anzeigegerät verbunden ist, das diese Verbindung anzeigt und gegebenenfalls ein entsprechendes Alarmsignal abgibt. Auf diese Weise erfährt jede Messung, bei welcher eine Feuchtigkeitsbrücke zwischen den beiden ersten Meßadern festgestellt wird, eine unabhängige Überprüfung durch die dritte Meßader. Deren Anordnung relativ zu den beiden ersten Meßadern kann auch von der Anordnung der beiden ersten Meßadern zueinander abweichen, wie später noch näher erläutert wird.

Grundsätzlich sollten jedoch auf jeden Fall die beiden ersten Meßadern einen verhältnismäßig geringen und vorzugsweise gleichmäßigen Abstand voneinander haben, damit eine Leckanzeige nicht erst dann erfolgt, wenn schon große Wassermengen die wasserdichte Sperrschicht des Daches durchdrungen haben.

Es versteht sich, daß derartige Meßadern entsprechend einem genau vorbestimmten Plan und mit einer genau abgemessenen Länge unter der wasserdichten Sperrschicht eines Flachdaches verlegt werden müssen, damit der später gemessene Widerstandswert einen eindeutigen Rückschluß auf den Ort des Lecks zuläßt.

Vorzugsweise sind die Meßadern einfache Metalldrähte, welche gemeinsam in im wesentlichen konstanten Abstand voneinander parallel in ein wasserdurchlässiges Gewebe eingeflochten oder eingewebt sind. Ebenso können jedoch auch durch Gewebe getrennte Metallfolien oder auch nichtmetallische, elektrisch leitfähige Substanzen als Meßadern verwendet werden.

Zweckmäßigerweise sollte der Temperaturkoeffizient des Widerstandes mindestens des ersten Meßdrahtes oder der Meßadern in etwa bei Null liegen, so daß der Temperaturgang des spezifischen Widerstandes derartiger Drähte nicht berücksichtigt zu werden braucht. Beispielsweise könnten Manganin-, Konstantan-, oder Kupfer-Nickel-Drähte verwendet werden. Vorzugsweise sind derartige Meßdrähte anstelle von oder parallel zu den Kettfäden eines ein- oder mehrschichtig gewebten Bandes eingewebt.

Auf diese Weise läßt sich ein konstanter und gleichzeitig kleiner Abstand zwischen den Meßdrähten sicherstellen, welche so nicht miteinander in Berührung treten können, wobei jedoch gleichzeitig der kleine Abstand durch eindringende Feuchtigkeit elektrisch leitend überbrückt wird, was zu einer Leckanzeige führt.

In der bevorzugten Ausführungsform der Erfindung sind vier Drähte parallel nebeneinander vorgesehen, wobei die beiden mittleren Drähte die beiden ersten Meßadern bilden, während die dritte und vierte Ader für eine Alarmanzeige vorgesehen sind.

Außerdem weist die bevorzugte Ausführungsform der Erfindung ein elektronisches Anzeige- und Alarmgerät auf, wobei eine Widerstandsmeßeinrichtung im wesentlichen aus einer Konstantstromquelle und einem Spannungsmeßgerät besteht und wobei das Alarmgerät einen optischen und/oder akustischen Signalgeber hat.

Zweckmäßigerweise ist das Spannungsmeßgerät ein Digitalvoltmeter. Außerdem ist in der bevorzugten Ausführungsform für das Spannungsmeßgerät eine Verriegelungsschaltung vorgesehen, welche durch die Alarmeinrichtung ansteuerbar ist.

Eine solche bevorzugte Vorrichtung zur Leckanzeige kann ohne weiteres im Dauerbetrieb arbeiten. Dabei fließt durch den ersten Meßdraht ständig ein kleiner konstanter Strom. Sobald eine Feuchtigkeitsbrücke die Verbindung zwischen dem ersten Meßdraht und dem zweiten Meßdraht herstellt, findet an dieser Stelle über den zweiten Meßdraht ein Spannungsabgriff am ersten Meßdraht statt, was voraussetzt, daß der Spannungseingang des Spannungsmeßgerätes wie allgemein üblich hochohmig ist. Da der Strom durch den ersten Meßdraht konstant gehalten wird, ist der abgegriffene Spannungswert unmittelbar proportional zum Widerstand des ersten Meßdrahtes. Gleichzeitig, gegebenenfalls auch je nach Anordnung der Drähte relativ zueinander und je nach der verwendeten elektronischen Schaltung mit einer gewissen zeitlichen Verzögerung, wird über den dritten Meßdraht die Alarmanzeige ausgelöst. Das den Alarm auslösende Signal kann seinerseits auf die Verriegelungsschaltung des Digitalvoltmeters gegeben werden, so daß dieses nunmehr den gemessenen Widerstandswert fest anzeigt. Selbst wenn in der Folgezeit weitere Lecks auftreten bzw. das Wasser von der eigentlichen Leckstelle fortfließt zu anderen Bereichen hin, ändert sich die Anzeige des Digitalvoltmeters nicht, so daß dieses eindeutig das Auftreten des ersten Leckpunktes und damit der eigentlichen Undichtigkeitsstelle des Daches anzeigt. Bei den herkömmlichen Systemen hing es dagegen vom Zeitpunkt der Messung ab, ob tatsächlich auch die Feuchtigkeitsbrücke unmittelbar an der Undichtigkeitsstelle des Daches gemessen wurde oder aber das Wasser inzwischen unter der wasserdichten Sperrschicht des Daches in andere Bereiche geflossen war und dort ein Leck vortäuschte.

Dabei hat es sich weiterhin als zweckmäßig erwiesen, wenn dem hochohmigen Eingang des Spannungsmeßgerätes ein Tiefpaßfilter vorgeschaltet ist. Die über weite Bereiche verlegten Drähte wirken nämlich als Antennen für Radiowellen, so daß durch ein Tiefpaßfilter daraus resultierende Störungen vermieden werden können.

Bevorzugt ist weiterhin eine Ausführungsform der Erfindung, bei welcher für den ersten Meßdraht als Stromquelle ein Operationsverstärker vorgesehen ist, dessen Ausgang mit einem Ende des ersten Meßdrahtes, dessen einer Eingang mit dem anderen Ende des ersten Meßdrahtes und dessen zweiter Eingang auf ein festes Potential, vorzugsweise auf Masse gelegt wird, während ein Ende des zweiten Meßdrahtes mit dem Spannungseingang des Spannungsmeßgerätes verbunden ist. Das andere Ende des zweiten Meßdrahtes kann frei enden. Der zweite Meßdraht dient somit lediglich als Hilfsleitung, um gegebenenfalls an einem beliebigen Punkt des ersten Meßdrahtes als Spannungsabgriff zu dienen, wenn dort eine Feuchtigkeitsbrücke auftritt.

Zweckmäßigerweise erhält man einen hochohmigen Spannungseingang durch einen als Spannungsfolger bzw. Impedanzwandler geschalteten Operationsverstärker.

Weiterhin hat es sich als zweckmäßig erwiesen, wenn der Eingang des als Stromquelle dienenden Operationsverstärkers, an welchem auch das eine Ende des ersten Meßdrahtes angeschlossen ist, über einen einstellbaren Widerstand mit Masse verbunden ist. Auf diese Weise läßt sich der gesamte Spannungsabfall über den ersten Meßdraht und den einstellbaren Widerstand so einstellen, daß die Ziffernfolge des Spannungswertes, der an einer beliebigen Stelle des ersten Meßdrahtes abgegriffen wird, genau der Länge in Metern vom Ausgangspunkt des ersten Meßdrahtes aus entspricht. Hierzu wird zweckmäßigerweise ein Abgriff am Ende des ersten Meßdrahtes vorgenommen und der einstellbare Widerstand so reguliert, daß die auf dem Digitalvoltmeter erscheinende Ziffernfolge dieses Spannungswertes gerade der Gesamtlänge des ersten Meßdrahtes in Metern entspricht. Dies erleichtert das Auffinden des genauen Leckpunktes ohne aufwendige Berechnungen.

Zweckmäßigerweise ist zu diesem Zweck am Ende des ersten Meßdrahtes ein Überbrückungsschalter zum zweiten Meßdraht vorgesehen.

Besonders vorteilhaft ist es, wenn ein vierter Meßdraht parallel zum ersten und zweiten Meßdraht vorgesehen ist, dessen eines Ende mit einer Strom/Spannungsquelle verbunden ist.

Der dritte Meßdraht kann dann entweder ebenfalls parallel zu dem vierten Meßdraht verlaufen und ist mit dem Eingang eines Alarmanzeigegerätes, beispielsweise einem Eingang eines als Komparator geschalteten Operationsverstärker verbunden. Bei Auftreten einer Feuchtigkeitsbrücke wird dann die Spannung vom vierten Meßdraht auf den dritten Meßdraht übertragen und damit die an dem Komparator eingestellte Schwellspannung überschritten, so daß am Ausgang des Operationsverstärkers ein Signal den Alarm auslöst und gleichzeitig die Verriegelungs- bzw. Halteschaltung des Digitalvoltmeters ansteuern kann.

Gemäß einer anderen bevorzugten Ausführungsform der Erfindung kann jedoch der dritte Meßdraht auch auf der feuchtigkeitsbeaufschlagten Seite der Dachhaut liegen, während die übrigen Adern unterhalb dieser Dachhaut angeordnet sind. Offensichtlich kann ein Leck nur bei Regen oder bei Schneeschmelze auftreten bzw. festgestellt werden, wobei in jedem Fall die gesamte äußere Dachoberfläche feucht bzw. nass ist. In diesem Fall wird beim Auftreten eines Lecks auf jeden Fall eine elektrisch leitende Verbindung zwischen der Außenseite des Daches und der Innenseite des Daches hergestellt, so daß der Alarm ausgelöst wird, sobald die Feuchtigkeit zwischen dem außen liegenden dritten Meßdraht und einem der unter Spannung stehenden inneren Meßdrähte hergestellt ist.

Hierdurch kann der Alarm ausgelöst werden, während der genaue Ort des Lecks nach wie vor durch den am ersten Meßdraht abgegriffenen Widerstandswert gegeben ist. In vorteilhafter Weise vermeidet man bei dieser Ausführungsform der Erfindung häufige Fehlalarme, wie sie bei bestimmten Dachtypen aufgrund von massiv auftretender Kondenswasserbildung vorkommen können.

Noch bevorzugter ist eine Ausführungsform, bei welcher das vieradrige Meßkabel als solches unter der Dachhaut bleibt und lediglich ein zusätzlicher fünfter Meßdraht außen auf der Dachhaut ausgelegt wird. Dieser außenliegende Meßdraht kann auch isoliert sein, solange er nur zumindest (z. am Ende) eine auf der Dachaußenhaut aufliegende Elektrode aufweist. Dabei hat es sich auch als zweckmäßig erwiesen, wenn die vier unter der Dachhaut liegenden Meßadern in der oben beschriebenen Weise für die Alarmauslösung verwendet werden, wobei im Falle eines Alarms über eine Prüftaste festgestellt wird, ob eine elektrisch leitende Verbindung zwischen dem auf der Dachaußenhaut liegenden Kabel bzw. der dort angeordneten Elektrode und einem der inneren Meßdrähte besteht. Sofern (trotz nasser Dachaußenhaut) diese Verbindung nicht besteht, ist von einem Fehlalarm, beispielsweise aufgrund von Kondensat, auszugehen. Ansonsten wird durch die Überprüfung sichergestellt, daß der Alarm tatsächlich auf ein Leck zurückzuführen ist.

Die vorliegende Erfindung betrifft auch ein spezielles Kabel, welches sich als besonders vorteilhaft für die Verwendung im Zusammenhang mit der erfindungsgemäßen Vorrichtung erwiesen hat. Ein solches Kabel besteht aus einem (inneren) Geflecht aus isolierendem Material, in welches gleichzeitig auch vier nicht isolierte metallische Meßdrähte derart eingeflochten sind, daß sie einander nicht berühren. Gleichzeitig ist dieses innere Geflecht aus Meßdrähten und Isoliermaterial von einem weiteren äußeren Geflecht aus isolierendem Material umgeben. Gegebenenfalls kann das äußere Geflecht auch durch einen perforierten Kunststoffschlauch ersetzt sein, ein Geflecht wird jedoch bevorzugt. Dieses sollte außerdem eine Dicke von mindestens 0,5 mm haben, bei einem versuchsweise hergestellten Meßkabel beträgt die Geflechtdicke sogar über 1 mm (1,3 mm). In vorteilhafter Weise erreicht man so, daß die Meßadern nicht in unmittelbaren Kontakt mit der Unterlage bzw. einer Auflage kommen, an welchen sich durch Kondensation dünne Feuchtigkeitsfilme abscheiden können, die sehr leicht einen Fehlalarm auslösen könnten. Durch den Mindestabstand von 0,5 oder gar mehr als 1 mm wird ein Fehlalarm durch Kontakt über Kondensationsfeuchtigkeitsfilme vermieden und der Alarm wird erst ausgelöst, wenn mindestens größere Tropfen in das Geflecht eindringen und den elektrischen Kontakt zwischen den Meßadern herstellen. Besonders bevorzugt ist dabei eine Ausführungsform des Kabels, bei welchem in dem inneren Geflecht die Meßadern wendelförmig um einen zentralen, isolierenden Kern herumlaufen. Die effektive Meßaderlänge wird dadurch vergrößert und bei gegebenem Drahtquerschitt erhöht sich der Widerstand pro lfm. Meter Meßstrecke. Typischerweise liegt bei einem versuchsweise hergestellten Prototypen des Kabels der Widerstand je lfm. Kabel (pro Ader) in der Größenordnung von einigen Ohm pro Meter, z.B. 20 Ohm pro Meter. Außerdem hat es sich als besonders zweckmäßig erwiesen, wenn parallel zu den Meßadern eine Orientierungsader mit in das innere Geflecht bzw. Gewebe eingeflochten ist, die farbig oder sonstwie markiert ist, so daß man ausgehend von der Orientierungsader und der festgehaltenen Reihenfolge der einzelnen Meßadern diese leicht identifizieren kann, ohne Messungen vornehmen zu müssen.

Es versteht sich, daß dieses speziell im Rahmen der vorliegenden Erfindung entwickelte Sensorkabel auch anderweitig Verwendung finden kann, für die erfindungsgemäße Vorrichtung jedoch besondere, vorteilhafte Eigenschaften hat, die mit keinem herkömmlichen Kabel erzielt werden können. Diese Kabel können auch im vorkonfektionierten Zustand mit sogenannten Ministeckern versehen und in festen Längen bevorratet werden. Als Ministecker werden vorzugsweise vierpolige Stecker mit vergoldeten Kontakten und kreisförmigem Querschnitt verwendet, wobei zweckmäßigerweise die Steckverbindung so codiert ist, daß Buchse und Stecker nur in einer fest vorgegebenen Orientierung zusammengesteckt werden können. Die Verwendung vergoldeter Kontakte ist deshalb von Bedeutung, weil zur genauen Ortung eines Lecks der Übergangswiderstand an Steckern und Lötstellen möglichst unverändert bleiben sollte, wobei Goldkontakte den Vorteil haben, nicht zu korrodieren.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren.

Es zeigen:

Fig. 1 den Schaltplan einer besonders einfachen Ausführungsform der Erfindung und

Fig. 2 den Schaltplan einer bevorzugten Ausführungsform der Erfindung.

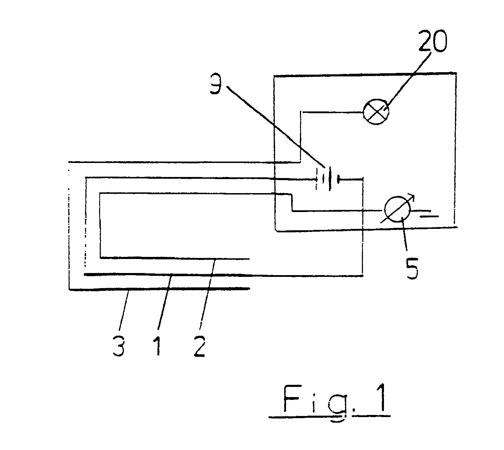

In Fig. 1 erkennt man schematisch drei in einer Schleife verlegt dargestellte Drähte 1, 2 und 3. Die beiden Enden des Drahtes 1 sind mit einer Konstantstromquelle 9 verbunden, die hier schematisch als Batterie dargestellt ist.

Der Draht 2 ist parallel zum Draht 1 in geringem Abstand zu diesem verlegt. Das eine Ende des Drahtes 2 liegt frei am Ende bzw. am Anfang der Verlegestrecke, das andere Ende ist mit einem Spannungsmeßgerät verbunden, dessen zweiter Eingang ebenso wie einer der Batteriepole geerdet ist. Es versteht sich, daß die Form der in einer Dachfläche verlegten Schleife weitgehend beliebig sein kann; bevorzugt werden Zickzack- oder Mäanderformen entsprechend einem genau vorgegebenen Verlegeplan.

Der Draht 3 verläuft ebenfalls parallel zur Draht 1 und ist mit einer Alarmeinrichtung 20 verbunden, deren Einzelheiten in Fig. 1 nicht näher dargestellt sind.

Ein an beliebiger Stelle auftretendes Leck im Dach führt dazu, daß der dem Leck nächstgelegene Teil der Drahtschleife feucht bzw. naß wird, so daß an dieser Stelle eine Verbindung zwischen dem stromdurchflossenen Draht 1 und den Drähten 2 und 3 hergestellt wird. Es versteht sich, daß sowohl der Eingang des Spannungsmeßgerätes 5 als auch der Eingang der Leckanzeige 20 hochohmig sein soll, um das Meßergebnis nicht zu verfälschen. Während über den Draht 3 lediglich der Alarm ausgelöst wird, zeigt das Spannungsmeßgerät 5 einen Spannungswert an, der dem Widerstand des Meßdrahtes 1 von seinem Ausgangspunkt bis zum Leck entspricht.

Auf diese Weise wird sofort beim Auftreten eines Lecks ein entsprechender Alarm ausgelöst und der in diesem Moment aktuelle Widerstandswert kann abgelesen bzw. gemessen werden. Dieser Widerstandwert gibt mit hoher Genauigkeit auch den Ort des Lecks an. Falls jedoch eine solche Messung erst relativ spät nach Auftreten des Lecks erfolgt, wie dies bei herkömmlichen Systemen häufig üblich war, so kann das durch das Leck eingedrungene Wasser unter der Dachhaut schon beträchtliche Wege zurückgelegt haben und täuscht damit ein Leck an einer Stelle vor, wo tatsächlich keines vorhanden ist. Derartige Fehlmessungen werden in vorteilhafter Weise durch die vorliegende Erfindung vermieden.

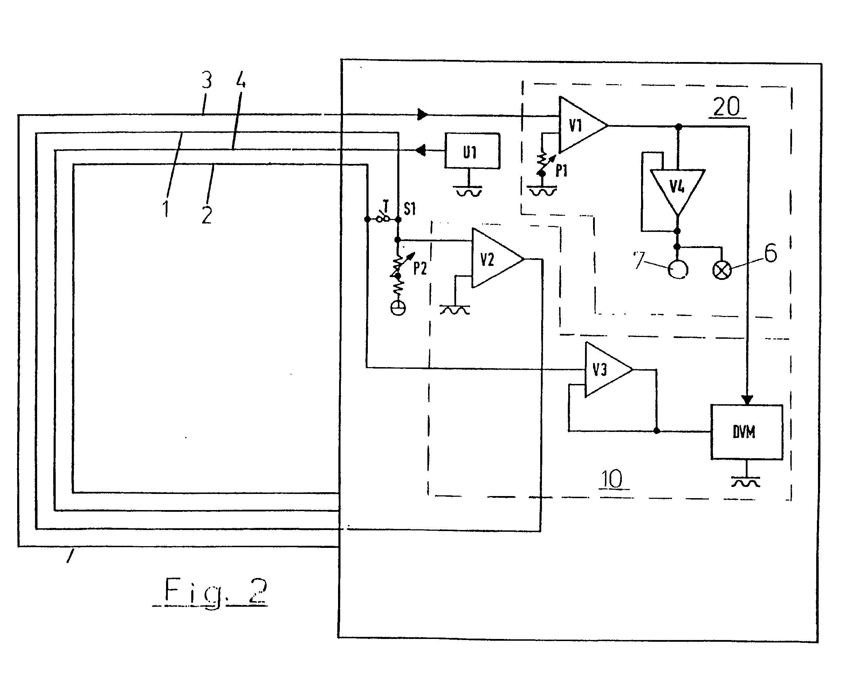

In der bevorzugten Ausführungsform der Erfindung gemäß Fig 2 ist für die Alarmauslösung ein vierter Meßdraht vorgesehen, der eine eigene Spannungsquelle U1 hat, die unabhängig von der Stromversorgung V2 für den ersten Meßdraht ist.

Als Stromquelle V2 dient hier ein entsprechend geschalteter Operationsverstärker, der dem Meßdraht 1 einen konstanten Strom aufprägt. Der Meßdraht 1 ist mit seinem einen Ende mit dem Ausgang der Stromquelle V2 verbunden, während das andere Ende an einen der beiden Eingänge angeschlossen ist. Der zweite Eingang ist geerdet. Auch der erste Eingang weist eine Masseverbindung auf, jedoch über einen einstellbaren Widerstand P2.

Über diesen Widerstand wird der von V2 abgegebene Strom reguliert, und zwar in der Weise, daß der Spannungsabfall entlang des Meßdrahtes 1 in seiner Ziffernfolge der Länge des Drahtes 1, gemessen in Metern vom Ausgangspunkt A, entspricht. Hierzu ist noch ein Schalter S1 mit einer Taste T vorgesehen, welcher den ersten und den zweiten Meßdraht am Ende bzw. hinter dem Ende der Meßstrecke überbrücken kann. Wird dieser Tastschalter geschlossen, so zeigt das Digitalvoltmeter 5 den gesamten Spannungsabfall am Meßdraht 1 an. Über P2 wird nun der von V2 abgegebene Strom so reguliert, daß die am Digitalvoltmeter 5 erscheinende Spannungsanzeige in ihrer Ziffernfolge genau der Meterzahl der Gesamtlänge des Meßdrahtes 1 entspricht.

Einen konstanten Querschnitt des Meßdrahtes 1 vorausgesetzt, zeigt dann jeder andere am Digitalvoltmeter erscheinende Spannungswert den entlang der Schleife zu messenden Abstand eines Lecks vom Ausgangspunkt in Metern an.

Dem eigentlichen Eingang des Digitalvoltmeters ist noch ein als Spannungsfolger geschalteter Operationsverstärker vorgeschaltet, der dafür sorgt, daß der Spannungsabgriff über den Meßdraht 2 so hochohmig erfolgt, daß Verfälschungen des Meßergebnisses ausgeschlossen sind.

Dem Operationsverstärker V3 kann wiederum noch ein Tiefpaßfilter vorgeschaltet sein, um Störungen durch Radiowellen auszuschließen.

Der Draht 4 verläuft ebenfalls parallel zum Meßdraht 1 und hat eine eigene Spannungsversorgung U1. Gleichfalls parallel zu den vorgenannten Drähten verläuft der Alarmdraht 3, der bei Auftreten eines Lecks eine Verbindung zum Draht 4 erhält, so daß hierdurch der Draht 3 ebenfalls unter Spannung gesetzt wird. Dieser Draht 3 ist mit dem Eingang eines als Komparator geschalteten Operationsverstärkers V1 verbunden, dessen anderer Eingang über einen einstellbaren Spannungsteiler auf eine beliebig vorgegebene Schwellspannung vorgespannt werden kann. Es versteht sich, daß die von U1 beim Auftreten eines Lecks auf den Meßdraht 3 übergegebene Spannung oberhalb dieses Schwellwertes liegt.

Bei Überschreiten der Schwellwertspannung im Meßdraht 3 schaltet der Ausgang des Komparators V1 ein Signal, welches zum einen über einen als Spannungsfolger geschalteten Operationsverstärker V4 den Alarm auslöst und zum anderen auch die Verriegelungsschaltung des Digitalvoltmeters 5 aktiviert.

Damit wird der momentan auf dem Digitalvoltmeter 5 angezeigte Spannungswert festgehalten. Die Alarmeinrichtung kann sowohl eine optische Alarmanzeige 6 als auch eine akustische Anzeige 7 aufweisen.

Die Drahtschleife ist in Fig. 2 nur schematisch dargestellt. In der Praxis besteht eine solche Drahtschleife aus mehreren parallel in ein Band eingewobenen oder geflochtenen Drähten. Wie bereits erwähnt, kann jedoch einer der Drähte auch auf der Außenseite des Daches angebracht bzw. mit einer dort angebrachten Elektrode verbunden sein.

Die vorstehend beschriebene Leckanzeige gewährt ein hohes Maß an Zuverlässigkeit und zeigt das Auftreten eines Lecks mit großer Genauigkeit zum frühestmöglichen Zeitpunkt an. Dabei werden außerdem Fehlanzeigen weitgehend vermieden bzw. ausgeschlossen. Dies erspart aufwendige Dachsanierungen, die erforderlich werden, wenn Lecks zu spät oder an der falschen Stelle geortet werden. Durch den Dauerbetrieb der Anlage, der mit sehr geringen Strömen und einem minimalen Energieverbrauch erfolgen kann, wird auch genau der Zeitpunkt des ersten Auftretens eines Lecks festgehalten, was für etwaige Gewährleistungsansprüche von enormer Bedeutung ist.

## Patentansprüche

1. Vorrichtung zur Anzeige eines Leck in einem Flachdach mit einem Paar von dicht beabstandeten elektrischen Meßadern (1,2), welche im trockenen Zustand voneinander isoliert sind, wobei jedoch zwischen die Meßadern (1, 2) eindringendes Wasser eine elektrisch leitfähige Verbindung zwischen den Meßadern herstellt und wobei eine Einrichtung (10) zur Messung des Widerstandes mindestens einer Meßader entlang ihrer Länge bis zur Feuchtigkeitsbrücke vorgesehen ist, **dadurch gekennzeichnet**, daß in dichtem Abstand zu den beiden ersten Meßadern (1, 2) mindestens eine weitere Meßader (3) vorgesehen ist, welche im trockenen Zustand isoliert ist und in nassem Zustand eine elektrisch leitfähige Verbindung zu einer der beiden ersten Meßadern (1, 2) und/oder zu einer vierten Ader hat, und daß die dritte Ader (3) mit einer Alarmeinrichtung (20) verbunden ist, welche so ausgelegt ist, daß sie ein Signal abgibt, wenn die dritte Ader zu einer der beiden ersten Meßadern (1 oder 2) und /oder zu der vierten Ader eine elektrisch leitende Verbindung hat.

2. Vorrichtung nach Anspruch 1, dadurch gekennzeichnet, daß die Adern (1, 2) Metalldrähte sind und gemeinsam mit im wesentlichen konstanten Abstand voneinander parallel in ein wasserdurchlässiges Gewebe eingeflochten oder eingewebt sind.

3. Vorrichtung nach Anspruch 1 oder 2, dadurch gekennzeichnet, daß die Adern (1, 2, 3 4) an Stelle von oder parallel zu den Kettfäden eines ein- oder mehrschichtigen gewebten Bandes eingewebt sind.

4. Vorrichtung nach einem der Ansprüche 1 bis 3, dadurch gekennzeichnet, daß mindestens eine der Meßadern (1) einen in etwa bei Null liegenden Temperaturkoeffizienten des elektrischen Widerstandes aufweisen.

5. Vorrichtung nach einem der Ansprüche 1 bis 4, dadurch gekennzeichnet, daß vier Adern (1, 2, 3, 4) parallel nebeneinander vorgesehen sind, wobei die beiden mittleren Adern die Meßadern sind und die dritte und vierte Ader für die Alarmanzeige vorgesehen sind.

6. Vorrichtung nach einem der Ansprüche 1 bis 5, dadurch gekennzeichnet, daß sie elektronische Anzeige- und Alarmgeräte aufweist, wobei die Widerstandsmeßeinrichtung (10) im wesentlichen aus einer Konstantstromquelle (V1) und einem Spannungsmeßgerät (5) besteht, und daß das Alarmgerät (20) einen optischen (6) und/oder akustischen Signalgeber (7) hat.

7. Vorrichtung nach Anspruch 5, dadurch gekennzeichnet, daß das Spannungsmeßgerät ein Digitalvoltmeter ist.

8. Vorrichtung nach Anspruch 6 oder 7, dadurch gekennzeichnet, daß für das Spannungsmeßgerät (5) eine Verriegelungsschaltung vorgesehen ist, welche durch die Alarmeinrichtung (20) ansteuerbar ist.

9. Vorrichtung nach einem der Ansprüche 6 bis 8, dadurch gekennzeichnet, daß dem hochohmigen Eingang des Spannungsmeßgerätes (6) ein Tiefpaßfilter vorgeschaltet ist.

10. Vorrichtung nach einem der Ansprüche 5 bis 9, dadurch gekennzeichnet, daß für die ersten Meßadern (1, 2) als Stromquelle ein Operationsverstärker (V2) vorgesehen ist, dessen Ausgang mit einem Ende einer Meßader (1), dessen erster Eingang auf ein festes Potential gelegt ist, vorzugsweise auf Masse, und dessen zweiter Eingang mit dem anderen Ende der Meßader (1) verbunden ist, während ein Ende der zweiten Meßader mit dem Eingang des Spannungsmeßgerätes (6) verbunden ist.

11. Vorrichtung nach Anspruch 10, dadurch gekennzeichnet, daß der zweite Eingang des Operationsverstärkers (V2) zusätzlich über einen Widerstand mit Masse verbunden ist.

12. Vorrichtung nach Anspruch 11, dadurch gekennzeichnet, daß unmittelbar vor dem Eingang der Meßadern (1, 2) in den Operationsverstärker bzw. in das Spannungsmeßgerät ein Schalter (S1) zum Verbinden der Meßadern vorgesehen ist.

13. Vorrichtung nach einem der Ansprüche 1 bis 12, dadurch gekennzeichnet, daß eine vierte Ader (4) parallel zu den beiden ersten Meßadern (1, 2) vorgesehen und mit einer Strom-/Spannungsquelle verbunden ist.

14. Vorrichtung nach einem der Ansprüche 1 bis 13, dadurch gekennzeichnet, daß die dritte Ader (3) auf der feuchtigkeitsbeaufschlagten Seite der Dachhaut liegt, während die übrigen Adern (1, 2, 4) unterhalb der an sich wasserdichten Dachhaut liegen.

15. Vorrichtung nach einem der Ansprüche 1 bis 13, dadurch gekennzeichnet, daß ein Meßkabel mit vier Meßadern unter der Dachhaut liegt, während eine fünfte Meßader auf der Dachhaut liegt und über mindestens eine Elektrode Kontakt zur Außenseite der Dachhaut hat.

16. Meßkabel zur Verwendung in einer Vorrichtung nach einem der Ansprüche 1 bis 14, dadurch gekennzeichnet, daß es mehrere nicht isolierte und in ein isolierendes Geflecht eingebettete Meßadern aufweist, die so in das isolierende Geflecht eingearbeitet sind, daß sie keine Berührung untereinander haben, wobei ein weiteres, äußeres isolierendes Geflecht die Meßadern und das innere Geflecht umhüllt und wobei das äußere Geflecht mindestens 0,5 mm dick ist.

17. Kabel nach Anspruch 15, wobei das äußere Geflecht durch eine perforierte Hülle ersetzt ist.

18. Kabel nach Ansprüch 14 oder 15, wobei die Meßadern in dem inneren Geflecht wendelförmig um einen zentralen Kern verlaufen und wobei eine farbig oder sonstwie markierte Führungsader parallel zu den Meßadern eingeflochten ist.

Fig. 1

Fig. 2